# EUROPEAN PATENT SPECIFICATION

(11) **EP 2 945 383 B1**
(45) Date of publication and mention of the grant of the patent: **18.07.2018**
(21) Application number: 15167533.7
(22) Date of filing: 13.05.2015
(51) Int. Cl.: H04N 19/13, H04N 19/157, H04N 19/174, H04N 19/172, H03M 7/40

(54) **ADAPTIVE CONTEXT INITIALIZATION**
ADAPTIVE KONTEXTINITIALISIERUNG
INITIALISATION DE CONTEXTE ADAPTATIF

(30) Priority: 14.05.2014 US 201414277172
(43) Date of publication of application: 18.11.2015
(73) Proprietor: BlackBerry Limited, Waterloo, ON N2K 0A7 (CA)
(72) Inventor: He, Dake, Waterloo, Ontario N2K 0A7 (CA); Wang, Xiaofeng, Markham, Ontario L6C 2N8 (CA); Wang, Jing, Waterloo, Ontario N2K 4K6 (CA); Ji, Tianying, Toronto, Ontario M2M 3N7 (CA); Flynn, David, Waterloo, Ontario N2K 0A7 (CA)
(74) Representative: MERH-IP Matias Erny Reichl Hoffmann Patentanwälte PartG mbB

(56) References cited:
- WO-A1-2004/034330
- WO-A1-2012/172114
- CN-A- 102 638 680
- JP-A- 2011 055 180
- US-A1- 2005 012 648
- US-A1- 2013 114 691
- US-B2- 7 292 165
- MARPE: "Slice initialization of CABAC", 3. JVT MEETING; 06-05-2002 - 10-05-2002; FAIRFAX, US; (JOINT VIDEO TEAM OF ISO/IEC JTC1/SC29/WG11 AND ITU-T SG.16), XX, XX, no. JVT-E154, 18 October 2002 (2002-10-18) , XP030005569,

## Description

### FIELD

The present application generally relates to data compression and, in particular, to methods and devices for context-adaptive video coding.

### BACKGROUND

Data compression occurs in a number of contexts. It is very commonly used in communications and computer networking to store, transmit, and reproduce information efficiently. It finds particular application in the encoding of images, audio and video. Video presents a significant challenge to data compression because of the large amount of data required for each video frame and the speed with which encoding and decoding often needs to occur. A popular video coding standard has been the ITU-T H.264/AVC video coding standard. It defines a number of different profiles for different applications, including the Main profile, Baseline profile and others. A newly-developed video coding standard is the ITU-T H.265/HEVC standard. Other standards include VP-8, VP-9, AVS, and AVS-2,

Many modern video coding standard use context-adaptive entropy coding to maximize coding efficiency. However, many standards also require a degree of independence between pictures or groups of pictures in the video. This often means that context adaptations are lost from picture-to-picture. In other words, with each new picture or slice, the encoder and decoder re-initializes the context model to a default context model state. If data is sparse, then there may be too few values to adapt the probabilities associated with a particular set of contexts quickly enough to make them efficient.

US Patent Application Publication No. 2013/114691 A1 discloses an apparatus comprising a coder for context adaptive entropy coding of a video unit. The coder is configured to code a syntax element, wherein a first value of the syntax element indicates that one or more of a plurality of context states are initialized using an adaptive initialization mode for the video unit, and a second value of the syntax element indicates that each of the plurality of context states is initialized using a default initialization mode for the video unit. The coder may be further configured to, when the syntax element has the first value, code a map that indicates which of the context states are initialized using the adaptive initialization mode, and to further code either an initial state value for those contexts, or information from which the initial state values of those adaptively initialized context may be derived. MARPE et al.: "Slice initialization of CABAC", 3. JVT MEETING; 06-05-2002 - 10-05-2002; FAIRFAX, US; (JOINT VIDEO TEAM OF ISO/IEC JTC1/SC29/WG11 AND ITU-T SG.16), no. JVT-E154, 18 October 2002 (2002-10-18), discloses defining three different initialization tables for P and B-slices and selecting one table based on the adapted context states of a reference slice. As reference slice, the last encoded slice of the same type (I, P, B), which contains the start macroblock of the current slice is used. Published US patent No. 7,292,165 B2 discloses context-based adaptive arithmetic coding and decoding methods and apparatuses and video coding and decoding methods and apparatuses using the same. The method for performing context-based adaptive arithmetic coding on a given slice in an enhancement layer frame of a video signal having a multi-layered structure includes steps of resetting a context model for the given slice to a context model for a base layer slice at the same temporal position as the given slice, arithmetically coding a data symbol of the given slice using the reset context model, and updating the context model based on the value of the arithmetically coded data symbol. In case that the given slice in the enhancement layer does not have a base layer slice at the same temporal position as the given slice, the context model for the given slice may be reset to a context model for a previously coded base layer slice.

### BRIEF SUMMARY

The present invention provides methods and encoders/decoders for encoding and decoding video as well as a non-transitory processor-readable medium, having the features of the respective independent claims. Preferred embodiments are described in the dependent claims.

Other aspects and features of the present application will be understood by those of ordinary skill in the art from a review of the following description of examples in conjunction with the accompanying figures.

### BRIEF DESCRIPTION OF THE DRAWINGS

Reference will now be made, by way of example, to the accompanying drawings which show example embodiments of the present application, and in which:
Figure 1 shows, in block diagram form, an encoder for encoding video;
Figure 2 shows, in block diagram form, a decoder for decoding video;
Figure 3 shows a block diagram of an entropy encoder;
Figure 4 shows a block diagram of one example entropy encoder in accordance with one aspect of the present application;
Figure 5 shows, in flowchart form, an example method for entropy encoding video data;
Figure 6 shows, in flowchart from, an example method for entropy decoding encoded data;
Figure 7 shows an example hierarchical layer structure for a video coding process;
Figure 8 shows, in flowchart form, one example method for selecting a stored context model state from a buffer;
Figure 9 diagrammatically shows a series of pictures in a training/static context initialization embodiment;
Figure 10 shows, in flowchart form, another example method for entropy encoding video data;
Figure 11 shows a simplified block diagram of an example embodiment of an encoder; and
Figure 12 shows a simplified block diagram of an example embodiment of a decoder.

Similar reference numerals may have been used in different figures to denote similar components.

### DESCRIPTION OF EXAMPLE EMBODIMENTS

In the description that follows, some example embodiments are described with reference to the H.264/AVC standard for video coding and/or the H.265/HEVC standard. Those ordinarily skilled in the art will understand that the present application is not limited to H.264/AVC or H.265/HEVC but may be applicable to other video coding/decoding standards, including possible future standards, multi-view coding standards, scalable video coding standards, 3D video coding standards, and reconfigurable video coding standards.

In the description that follows, when referring to video or images the terms frame, picture, slice, tile and rectangular slice group may be used somewhat interchangeably. Those of skill in the art will appreciate that a picture or frame may contain one or more slices. A series of frames/pictures may be called a "sequence" in some cases. Other terms may be used in other video coding standards. It will also be appreciated that certain encoding/decoding operations might be performed on a frame-by-frame basis, some are performed on a slice-by-slice basis, some picture-by-picture, some tile-by-tile, and some by rectangular slice group, depending on the particular requirements or terminology of the applicable image or video coding standard. In any particular embodiment, the applicable image or video coding standard may determine whether the operations described below are performed in connection with frames and/or slices and/or pictures and/or tiles and/or rectangular slice groups, as the case may be. Accordingly, those ordinarily skilled in the art will understand, in light of the present disclosure, whether particular operations or processes described herein and particular references to frames, slices, pictures, tiles, rectangular slice groups are applicable to frames, slices, pictures, tiles, rectangular slice groups, or some or all of those for a given embodiment. This also applies to coding tree units, coding units, prediction units, transform units, etc., as will become apparent in light of the description below.

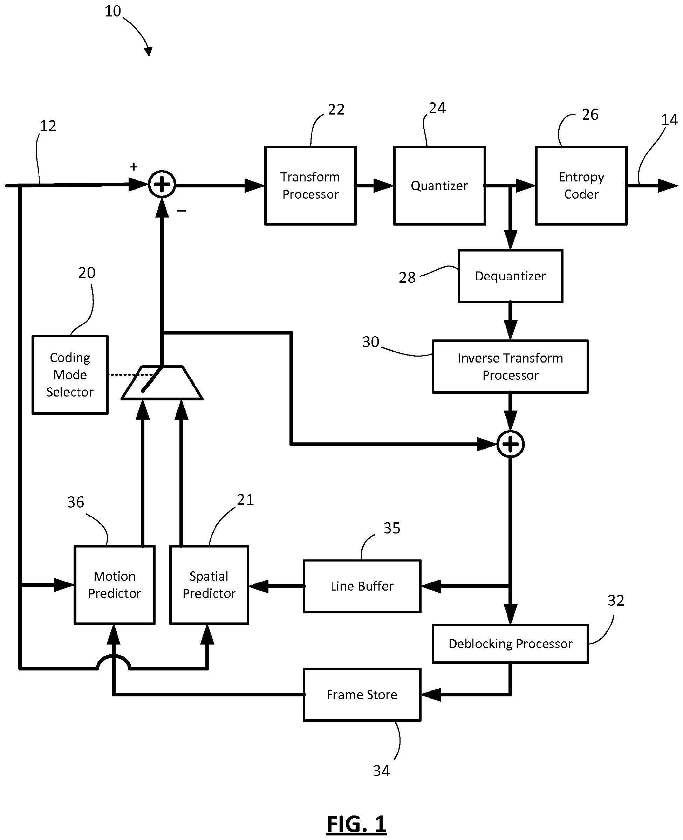

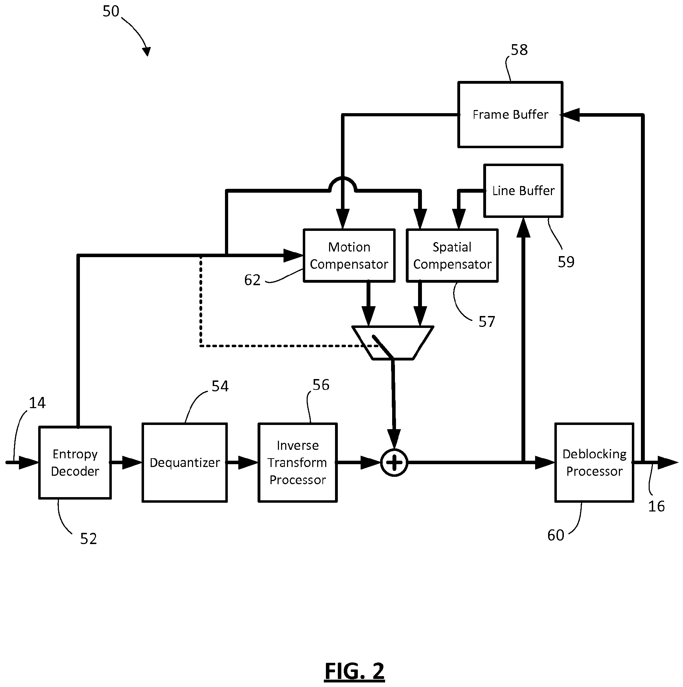

Reference is now made to Figure 1, which shows, in block diagram form, an encoder 10 for encoding video. Reference is also made to Figure 2, which shows a block diagram of a decoder 50 for decoding video. It will be appreciated that the encoder 10 and decoder 50 described herein may each be implemented on an application-specific or general purpose computing device, containing one or more processing elements and memory. The operations performed by the encoder 10 or decoder 50, as the case may be, may be implemented by way of application-specific integrated circuit, for example, or by way of stored program instructions executable by a general purpose processor. The device may include additional software, including, for example, an operating system for controlling basic device functions. The range of devices and platforms within which the encoder 10 or decoder 50 may be implemented will be appreciated by those ordinarily skilled in the art having regard to the following description.

The encoder 10 receives a video source 12 and produces an encoded bitstream 14. The decoder 50 receives the encoded bitstream 14 and outputs a decoded video frame 16. The encoder 10 and decoder 50 may be configured to operate in conformance with a number of video compression standards.

The encoder 10 includes a spatial predictor 21, a coding mode selector 20, transform processor 22, quantizer 24, and entropy encoder 26. As will be appreciated by those ordinarily skilled in the art, the coding mode selector 20 determines the appropriate coding mode for the video source, for example whether the subject frame/slice is of I, P, or B type, and whether particular coding units within the frame/slice are inter or intra coded. The transform processor 22 performs a transform upon the spatial domain data. In particular, the transform processor 22 applies a block-based transform to convert spatial domain data to spectral components. For example, in many embodiments a discrete cosine transform (DCT) is used. Other transforms, such as a discrete sine transform, a wavelet transform, or others may be used in some instances. The block-based transform is performed on a transform unit. The transform unit may be the size of the coding unit, or the coding unit may be divided into multiple transform units. In some cases, the transform unit may be non-square, e.g. a non-square quadrature transform (NSQT).

Applying the block-based transform to a block of pixel data results in a set of transform domain coefficients. A "set" in this context is an ordered set in which the coefficients have coefficient positions. In some instances the set of transform domain coefficients may be considered as a "block" or matrix of coefficients. In the description herein the phrases a "set of transform domain coefficients" or a "block of transform domain coefficients" are used interchangeably and are meant to indicate an ordered set of transform domain coefficients.

The set of transform domain coefficients is quantized by the quantizer 24. The quantized coefficients and associated information are then encoded by the entropy encoder 26.

Intra-coded frames/slices (i.e. type I) are encoded without reference to other frames/slices. In other words, they do not employ temporal prediction. However intra-coded frames do rely upon spatial prediction within the frame/slice, as illustrated in Figure 1 by the spatial predictor 21. That is, when encoding a particular block the data in the block may be compared to the data of nearby pixels within blocks already encoded for that frame/slice. Using a prediction operation, the encoder creates a predicted block or unit based on the data of nearby pixels. There are various modes or directions for prediction. In some cases rate-distortion optimization may be used to select a mode/direction. The nearby pixels used in the prediction operation are reconstructed pixels that have been previously encoded and decoded and stored in a line buffer 35 within the feedback loop. The difference between the actual pixel data for the block and the predicted block is a residual block, *i.e.* an error signal. The residual data is transformed, quantized and encoded for transmission in the bitstream 14.

Inter-coded frames/blocks rely upon temporal prediction, *i.e.* they are predicted using reconstructed data from other frames/pictures. The encoder 10 has a feedback loop that includes a de-quantizer 28, inverse transform processor 30, and deblocking processor 32. The deblocking processor 32 may include a deblocking processor and a filtering processor. These elements mirror the decoding process implemented by the decoder 50 to reproduce the frame/slice. A frame store 34 is used to store the reproduced frames. In this manner, the motion prediction is based on what will be the reconstructed frames at the decoder 50 and not on the original frames, which may differ from the reconstructed frames due to the lossy compression involved in encoding/decoding. A motion predictor 36 uses the frames/slices stored in the frame store 34 as source frames/slices for comparison to a current frame for the purpose of identifying similar blocks. In other words, a motion vector search is carried out to identify a block within another frame/picture. That block is the source of the predicted block or unit. The difference between the predicted block and the original block becomes the residual data that is then transformed, quantized and encoded.

Those ordinarily skilled in the art will appreciate the details and possible variations for implementing video encoders.

The decoder 50 includes an entropy decoder 52, dequantizer 54, inverse transform processor 56, and deblocking processor 60. The deblocking processor 60 may include deblocking and filtering processors. A line buffer 59 stores reconstructed pixel data while a frame/picture is being decoded for use by a spatial compensator 57 in intra-coding. A frame buffer 58 stores fully-reconstructed and deblocked frames for use by a motion compensator 62 in applying motion compensation.

The bitstream 14 is received and decoded by the entropy decoder 52 to recover the quantized coefficients. Side information may also be recovered during the entropy decoding process, including coding mode information, some of which may be supplied to the feedback loop for use in creating the predictions. For example, the entropy decoder 52 may recover motion vectors and/or reference frame information for inter-coded blocks, or intra-coding mode direction information for the intra-coded blocks.

The quantized coefficients are then dequantized by the dequantizer 54 to produce the transform domain coefficients, which are then subjected to an inverse transform by the inverse transform processor 56 to recreate/reconstruct the residual pixel-domain data. The spatial compensator 57 generates the video data from the residual data and a predicted block that it creates using spatial prediction. The spatial prediction applies the same prediction mode/direction as was used by the encoder in reliance upon previously-reconstructed pixel data from the same frame. Inter-coded blocks are reconstructed by creating the predicted block based on a previously-decoded frame/picture and the motion vector decoded from the bitstream. The reconstructed residual data is then added to the predicted block to generate the reconstructed pixel data. Both spatial and motion compensation may be referred to herein as "prediction operations".

A deblocking/filtering process may then be applied to a reconstructed frame/slice, as indicated by the deblocking processor 60. After deblocking/filtering, the frame/slice is output as the decoded video frame 16, for example for display on a display device. It will be understood that the video playback machine, such as a computer, set-top box, DVD or Blu-Ray player, and/or mobile handheld device, may buffer decoded frames in a memory prior to display on an output device.

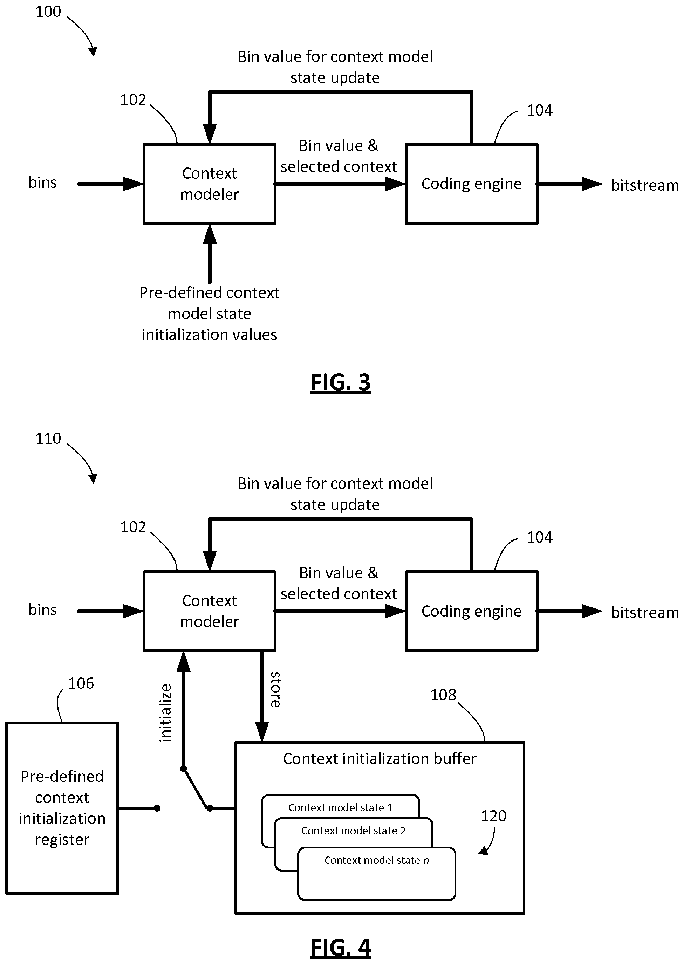

Reference is now made to Figure 3, which shows a block diagram of an entropy encoder 100. In this example the entropy encoder 100 is a context-adaptive binary arithmetic coder (CABAC). CABAC has become a popular entropy encoding mechanism used in most modern video coding processes. As a context-adaptive coding process, the entropy encoder 100 receives bins (which may involve binarizing non-binary syntax elements) and uses a context model to determine an associated probability that a particular bin is a most probable symbol. The determination of probability is based on a context model. The context model may include a number of individual contexts, each having its own associated probability. The entropy encoder 100 includes a context modeler 102 that selects a context for a particular bin. The context selection may be based on any number of factors and parameters defined in the context model, including a history for the syntax element or related previously-encoded elements or bins. Once the context is selected, the context's associated probability is used in a coding engine 104 to arithmetically encode the actual bin value. The coding engine 104 outputs a bitstream of encoded data.

The actual bin value is then used to update the context model. The bin value may be used to adjust the probability of the context selected for encoding of that bin value. In other words, the actual value of the bin may impact the probability used for encoding the next bin having that same selected context. This feature makes the coding process "context-adaptive". Context-adaptive models tend to outperform static context models because the context model state is adapted to the actual data over time. Provided there is sufficient data for each context, then each context should have an improved accuracy as the encoding proceeds.

The context modeler 102 begins the coding process by initializing the context model state. That is, it must select an initial probability for each context. That initial context model state (*i.e.* the initial probabilities) are loaded into the context modeler 102 during initialization. In some cases, there may be two or more pre-defined context model initialization states and the encoder may select one of them to use in a particular situation. In many coding process, to reduce error propagation and improve resiliency a condition of independence is imposed on partitions of video, *i.e.* groups-of-pictures, pictures, slices, etc. For example, in AVS2 and H.264, for each slice the context model is re-initialized with the predefined context model state.

The problem created when the context models state is reinitialized to default probabilities at every slice boundary is that there may be too few bins associated with certain contexts in a slice to accurate adapt that context in the course of encoding a slice. As a result, the CABAC process is not as effective and efficient as it could be, and BD rate performance suffers.

If no "independence" condition is imposed at a picture or slice level, then the coding process could initialize the context model state once per video, or sequence, or group-of-pictures, or at another granularity, in order to ensure enough bins are available for each context of the context model to adapt to an accurate probability state. This results in potential problems with error propagation and decoding complexity because of the interdependency among a number of pictures/slices.

### Context Initialization Buffer

Reference is now made to Figure 4, which shows a block diagram of one example of an entropy encoder 110. The entropy encoder 110 includes the context modeler 102 and coding engine 104, and further includes a context initialization buffer 106.

The context modeler 102 is initialized using either a pre-defined context model state from a pre-defined context initialization register 106, or a stored context model state 120 from a context initialization buffer 108. The pre-defined context initialization register 106 stores the one or more pre-defined context model states.

The context initialization buffer 108 stores the actual context model state from the context modeler 102 after encoding of a previous slice or picture in the video. The entropy encoder 110 encodes a slice or picture, which causes context-adaptive updating of the context model state in the context modeler 102 with each bin (other than bypass coded bins). Once the slice or picture is encoded, the context modeler 102 contains an adapted or updated context model state. This updated context model state is stored in the context initialization buffer 108.

Before encoding the next slice or picture, the entropy encoder 110 determines whether to initialize the context model using a pre-defined context model state from the pre-defined context initialization register 106 or a stored context model state 120 from the context initialization buffer 108. This determination may be based on a number of factors, some of which are described further below.

In some embodiments, the context initialization buffer 108 may store two or more context model states 120 corresponding to the context model state following context-adaptive entropy encoding of a respective two or more previous slices or pictures. The entropy encoder 110 may select one of the stored context model states 120 for use in initializing the context model in the context modeler 102. The selection may be based on a number of factors, some of which are described further below.

The encoder may insert flags or other syntax elements in the bitstream to indicate to the decoder whether the context model is to be initialized using the pre-defined context initialization register 106 or the context initialization buffer 108 for a particular slice or picture. Illustrative example flags and syntax are provided below.

In some cases, the decoder may be configured to determine whether to initialize using the pre-defined context initialization register 106 or the context initialization buffer 108 for a particular slice or picture using the same logic or algorithmic operations as the encoder.

When selecting between two or more stored context model states in the context initialization buffer 108, the decoder may rely upon a flag or one or more other syntax elements encoded by the encoder to make the selection, or the decoder may make the selection based upon the same logical or algorithmic selection process employed by the encoder.

In one case, in order to allow for backward compatibility, when it is known that the decoder is not able to use various context model states, then only the pre-defined context model set/state is used. However, when it is known that the decoder is able to use various context model sets/states, then the described context model sets/states selection process is used. The decoder capability can be known via any negotiation procedure (e.g. session description protocol SDP).

In some cases, when multiple representations of content are made available, such as in dynamic adaptive streaming over HTTP (DASH), or Mpeg Multimedia Transport (MMT), then one of the representations could correspond to a version of the coder that includes such modification to the entropy context model.

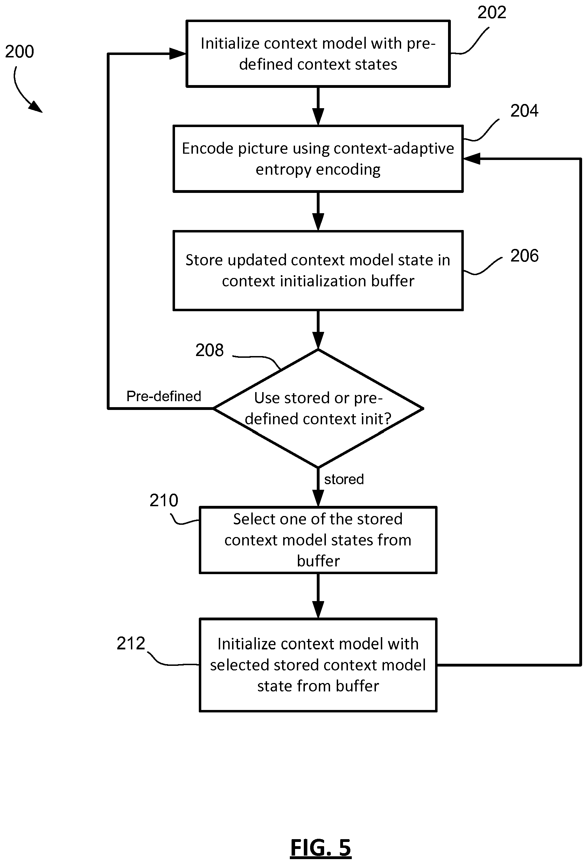

Reference will now be made to Figure 5, which shows an example flowchart for a method 200 of entropy encoding video. The method 200 begins with initialization of the context model in operation 202. The context model is initialized with a pre-defined context state. This pre-defined state may be one of equal probabilities for all contexts in some cases. In others, this operation 202 may include selecting between a number of available pre-defined context states. The selection may be based upon the picture type, QP value, or other coding parameters.

In operation 204, the encoder entropy encodes a picture (or, in some embodiments, a slice or other portion of video) of video using context-adaptive entropy encoding. References herein to determinations or selections being made for a picture may be made at a slice-level in some embodiments or at other levels of granularity.

In this process, the context model states are continuously updated based on actual bin values and context determinations. Following operation 204, the entropy encoder has a context model with adapted state values.

In operation 206, the updated context model state is stored in the context initialization buffer. In one embodiment, the buffer stored only the most recent context state. Accordingly, with each picture that is encoded, the ending context state is stored in the buffer overwriting the previously-stored context state. In such an embodiment, only the previous picture's (or slice's) context state is available for use in initializing the context model for the next picture (or slice).

In another embodiment, the buffer stores two or more context model states from the respective two or more previously-encoded pictures (or slices). In this embodiment, the entropy encoder selected between the available stored context states when using the buffer to initialize the context model. The number of stored context model states may be predetermined. For example, the buffer may store five context model states from the five most recently encoded pictures (or slices). After encoding of a picture, the corresponding context model state is stored in place of the oldest of the stored context model states in the buffer.

In yet another embodiment, the buffer stores various context states corresponding to, for example, a lossless mode, a transform skip mode, a transform and quantization skip mode, a screen content mode, an High Dynamic Range mode, a wide color gamut mode, a bit-deph mode, a scalable mode, and/or a color component mode (e.g. 4:4:4, 4:2:2). As such, when the bitstream comprises an indication that any one of those modes is used for a picture, a sequence or a subset of a picture, then the related context states are used.

In yet another embodiment, the buffer stores a plurality of context model states, each corresponding to particular category or type of picture (or slice). For example, the entropy encoder may store a context model state for each QP value or for a number of subsets of QP values. When a new context model state is to be stored for a QP value (or subset of QP values) that already has an associated stored context model state, then the old context model state is overwritten. In another example, the buffer may store the most recent context model state corresponding to each picture types, e.g. I-pictures, P-pictures, and B-pictures. In another example, the buffer may store the most recent context models state corresponding to a hierarchical layer. In yet another example, the buffer may store only context model states of those pictures that may serve as reference pictures for a prediction operation in encoding future pictures. Other types or characteristics of the pictures may be used, individually or grouped into similar types.

The entropy encoder then determines, in operation 208, whether to use a pre-defined context model state from the pre-defined context initialization register or a stored context model state from the buffer when initializing the context model for encoding the next picture. The determination may be based upon whether the available stored context model states meet certain criteria relative to the picture to-be-encoded. Example criteria may include one or more of: being of the same picture type, having the same or similar QP value, being of the same or higher/lower hierarchical level, being within a threshold temporal distance in the video sequence, being a reference frame used by the picture-to-be-encoded, and other factors, either alone or in combination with any of the above factors.

If the entropy encoder determines that the pre-defined context model state is to be used for initialization, then the method 200 returns to operation 202. Otherwise, it continues at operation 210, where the entropy encoder selects one of the stored context model states from the buffer. The selection may be based upon a number of criteria relative to the picture to-be-encoded. The criteria may be applied alone or in combination. Example criteria may include one or more of: being of the same picture type, having the same or similar QP value, being of the same or higher/lower hierarchical level, being within a threshold temporal distance in the video sequence, being a reference frame used by the picture-to-be-encoded, and other factors, either alone or in combination with any of the above factors.

In operation 212, the context model is initialized using the context model state selected from the buffer in operation 210. The method 200 then proceeds to operation 204 to entropy encode the picture-to-be-encoded using context-adaptive encoding starting from the initialized context model state.

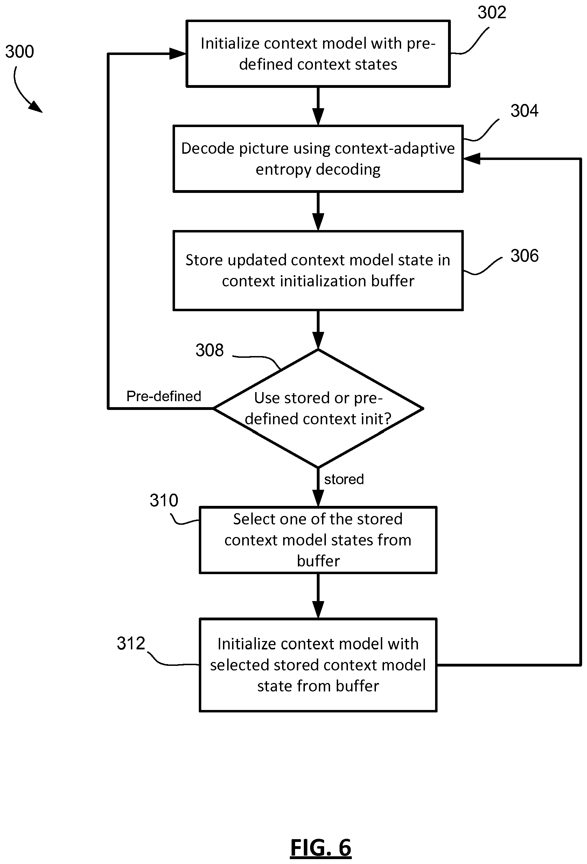

A corresponding example decoding method 300 for reconstructing a video from a bitstream of encoded data is shown in an example flowchart in Figure 6.

The method 300 includes initialization of the context model in operation 202. The same context model used by the encoder is used by the decoder. The context model is initialized with the pre-defined context state. This pre-defined state may be one of equal probabilities for all contexts in some cases. In others, this operation 302 may include selecting between a number of available pre-defined context states. The selection may be based upon the picture type, QP value, or other coding parameters. The selection may alternatively be based upon a flag or syntax element sent by the encoder in the bitstream that identifies the pre-defined context model state to be used.

In operation 304, the decoder entropy decodes a picture (or, in some embodiments, a slice or other portion of video) of video using context-adaptive entropy decoding. References herein to determinations or selections being made for a picture may be made at a slice-level in some embodiments or at other levels of granularity.

In this process, the context model states are continuously updated based on actual bin values and context determinations. Following operation 304, the entropy decoder has a context model with adapted state values.

In operation 306, the updated context model state is stored in the decoder's context initialization buffer. In one embodiment, the buffer stored only the most recent context state. Accordingly, with each picture that is decoded, the ending context state is stored in the buffer overwriting the previously-stored context state. In such an embodiment, only the previous picture's (or slice's) context state is available for use in initializing the context model for the next picture (or slice) to be decoded.

In another embodiment, the buffer stores two or more context model states from the respective two or more previously-decoded pictures (or slices). In this embodiment, the entropy decoder selects between the available stored context states when using the buffer to initialize the context model. The number of stored context model states may be predetermined. For example, the buffer may store five context model states from the five most recently decoded pictures (or slices). After decoding of a picture, the corresponding context model state is stored in place of the oldest of the stored context model states in the buffer.

In yet another embodiment, the buffer stores a plurality of context model states, each corresponding to particular category or type of picture (or slice). For example, the entropy decoder may store a context model state for each QP value or for a number of subsets of QP values. When a new context model state is to be stored for a QP value (or subset of QP values) that already has an associated stored context model state, then the old context model state is overwritten. In another example, the buffer may store the most recent context model state corresponding to each picture types, *e.g.* I-pictures, P-pictures, and B-pictures. In another example, the buffer may store the most recent context model state corresponding to a hierarchical layer. In yet another example, the buffer may store only context model states of those pictures that may serve as reference pictures for a prediction operation in decoding future pictures. Other types or characteristics of the pictures may be used, individually or grouped into similar types.

The entropy decoder then determines, in operation 308, whether to use a pre-defined context model state from the pre-defined context initialization register or a stored context model state from the buffer when initializing the context model for decoding the next picture. The determination may be based upon whether the available stored context model states meet certain criteria relative to the picture-to-be-decoded. Example criteria may include one or more of: being of the same picture type, having the same or similar QP value, being of the same or higher/lower hierarchical level, being within a threshold temporal distance in the video sequence, being a reference frame used by the picture-to-be-decoded, and other factors, either alone or in combination with any of the above factors. In some embodiments, the decoder makes the determination based on a flag or other syntax element from the bitstream. The encoder may insert the flag or other syntax element to signal to the decoder whether to use pre-defined context model states or stored context model states.

If the entropy decoder determines that the pre-defined context model state is to be used for initialization, then the method 300 returns to operation 302. Otherwise, it continues at operation 310, where the entropy decoder selects one of the stored context model states from the buffer. The selection may be based upon a number of criteria relative to the picture to-be-decoded. The criteria may be applied alone or in combination. Example criteria may include one or more of: being of the same picture type, having the same or similar QP value, being of the same or higher/lower hierarchical level, being within a threshold temporal distance in the video sequence, being a reference frame used by the picture-to-be-decoded, and other factors, either alone or in combination with any of the above factors. Again, in some embodiments, the decoder may make this selection based upon a syntax element inserted in the bitstream by the encoder to signal which context model state to use.

In operation 312, the context model is initialized using the context model state selected from the buffer in operation 310. The method 300 then proceeds to operation 304 to entropy decode the picture-to-be-decoded using context-adaptive decoding starting from the initialized context model state.

One of the factors or criteria mentioned above is hierarchical layer. In some video coding processes, groups-of-pictures may have a defined hierarchical structure within them defining whether particular pictures are lower layer pictures or higher layer pictures. The hierarchy may be used for a number of purposes. For example, the references pictures available to predict a picture may be limited based upon the layer relationship. For example, a picture may be limited to serving as a reference for pictures in the same or a lower (or higher) layer. In some cases, the number of candidate reference pictures may be limited in number or in temporal distance. Other conditions or restrictions could be imposed based on the hierarchical structure of the group-of-pictures.

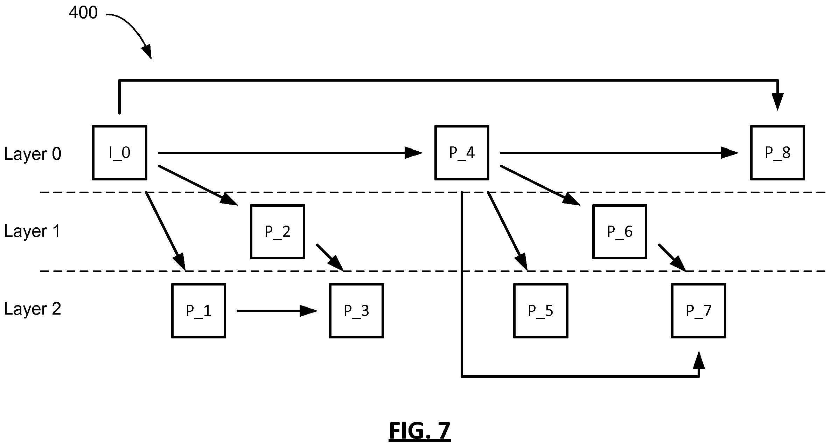

One example hierarchical structure 400 is diagrammatically illustrated in Figure 7. The structure 400 shown corresponds to a low-delay P-type Group of Pictures (GOP) in the H.265/HEVC standard. In this example, the picture type is indicated by the letter I or P, and the suffix indicates the temporal display sequence. In this example, the structure 400 has three layers: layer 0, layer 1 and layer 2. The arrows indicate which pictures may serve as reference pictures for predicting other pictures. For example, picture P_3 may use pictures P_1 and P_2 as a reference picture, but not picture I_0. In this example structure 400, various logic rules may restrict available reference pictures. For example, a picture may be limited to having two possible reference pictures. Other restrictions may also apply.

It will be appreciated that the structure 400 is only illustrative and that other structures may be used in other situations. The structures may have two layers, three layers, or more. Different rules may apply in different embodiments.

In the processes described in Figure 5 and 6, there are various conditions relating to the hierarchical structure that may be applied in selecting a stored context model state. For example, only context model states that correspond to pictures from the same hierarchical layer may be used. Or, only context model states from pictures that are available candidates to serve as reference pictures in accordance with the hierarchical structure may be used. Or, only context models states from layers above the current layer may be used. Other possibilities will be appreciated in light of the description herein.

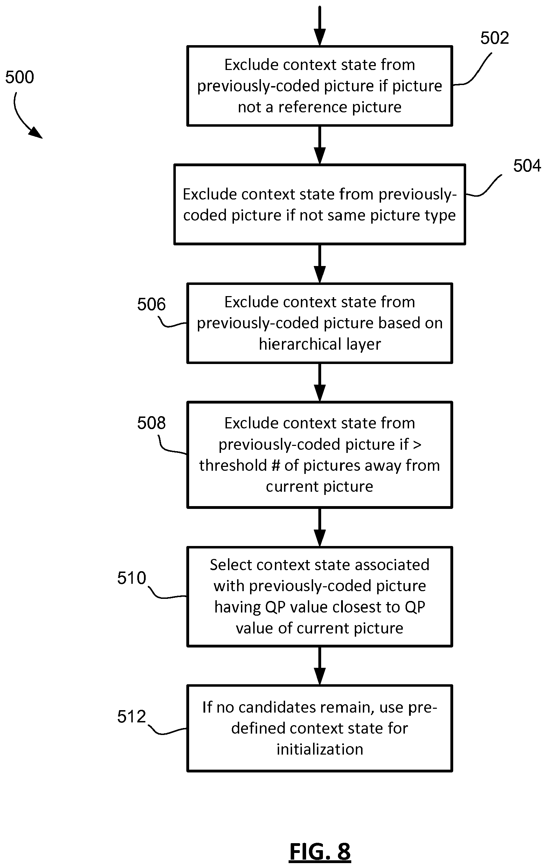

Reference is now made to Figure 8, which shows, in flowchart form, one example process 500 for selecting a context model state from a buffer storing context model states. The process 500 may be implemented by an encoder or a decoder for the purpose of selecting a context model state for initializing a context model during encoding or decoding, as the case may be. The process 500 presumes that the encoder (or decoder in the case of decoding) has determined that the initialization is to be based on a stored context model and not based on a set of pre-defined context values. The example process 500 is structure to include a number of conditions for selecting a context model state. Not all conditions may be applied in some embodiments. In some cases, only one condition may be applied. In some embodiments, more conditions may be applied.

In this example process 500, candidate stored context sets are filtered based on a set of conditions. The conditions used in any particular embodiment may be aimed at ensuring the candidate context model states are those developed during encoding/decoding of pictures that are most likely to be statistically similar to the current picture.

In operation 502, the process 500 excludes candidates if they are not associated with a reference frame. That is, the only candidates that are permitted are those context sets that were derived during the encoding/decoding of pictures that are (or are permitted to be) reference pictures to the current picture. In one embodiment, this condition restricts candidates to actual reference pictures used by the current picture. In another embodiment, this condition restricts candidates to pictures that are permitted to be reference pictures to the current picture irrespective of whether they are actually used as such.

Operation 504, excludes any candidates pictures that are not of the same picture type. For example, B pictures may only use stored context states associated with other B pictures; I pictures may only use stored context states associated with other I pictures, etc.

Operation 506 excludes candidate stored context states from pictures based on a hierarchical layer relationship. As noted above, this condition may limit candidates to those pictures in the same hierarchical layer in some cases. In other implementations, this condition may limit candidates to those pictures in layers above the current layer. In other implementations, this condition may limit candidates to those pictures in the same layer or layers above.

Operation 508 excludes candidate stored context model states obtained from pictures that are more than a threshold number of pictures temporally distant from the current picture.

In operation 510, from any remaining candidate context model states, a context model state is selected on the basis that its associated picture uses a QP value closest to the QP value used with the current picture.

If no candidates remain for selection at the end of the process 500, then the pre-defined context state initialization values are used, as indicated by operation 512.

In another embodiment, any one of the above "filtering" conditions by which candidates are excluded may be used as a "selecting" condition. For example, in operation 508 instead of filtering out stored context model states on the basis that they are more than a threshold temporal distance away, minimizing the temporal distance may be the basis for selecting amongst candidate stored context model states. For example, as between two stored context model states, the encoder and decoder may be configured to use the one closest in the display sequence.

In yet another embodiment, the process to select one context model states out of two or more stored states uses hypothesis testing. That is, each stored state is a candidate associated with a cost in hypothesis testing. The cost is determined by assigning a numerical score to each of the relevant conditions (picture type, hierarchical layer, temporal distance, quantization parameters, being a reference picture or not, etc.), and aggregating them. The candidate with the smallest cost is then selected.

It will be understood that although the above description refers to context model states associated with respective pictures, the same methods and processes may be applied in the case of context model states associated with slices.

In one embodiment, the context model buffer is updated by storing a context model state after each slice. In one variation, the encoder/decoder determine whether to overwrite a previously stored context model state in the buffer based on whether the associated slices have the same characteristics. For example, if the slices have the same (or similar) QP values, are from the same picture type, are on the same hierarchical level, etc. More or fewer characteristics may be applied in different implementations. Context model states stored in the buffer for one picture may be available for used by other slices in the same picture.

In one embodiment, context model states may be stored in the buffer after each picture. In other words, a temporary buffer or memory holds the context models states for individual slices and, when the picture is finished encoding/decoding, then the temporarily stored context model states are saved to the buffer to make them available for enoding/decoding slices in subsequent pictures.

### Training/Static Phases

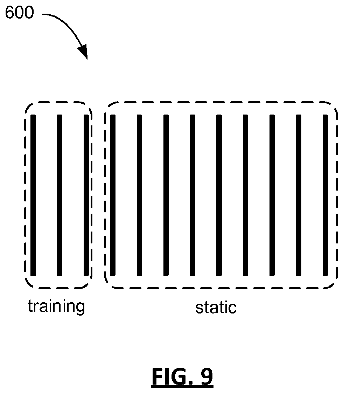

In yet another embodiment, some frames/pictures are designated for "training" context model states and other frames/pictures are designated for "static" use of trained context model states. Reference is now made to Figure 9, which diagrammatically shows an example set of twelve pictures 600. The pictures 600 may or may not form a complete GOP.

In this example, the first three pictures 600 (in encoding/decoding sequence, which may or may not be the same as the display sequence) are designated as training pictures 602. The remaining pictures are designated as "static" pictures 604. They are "static" in the sense that the context model state at the end of encoding/decoding these pictures is not saved for use in subsequent initializations.

During the training phase, the context model states developed during encoding/decoding of the training pictures 602 are saved. This context model state(s) is then available for use in initializing the context model during encoding/decoding of the static pictures 604.

In a first embodiment, the training pictures 602 use the pre-defined context model state for initializing the model. At the end of encoding/decoding each training picture 602, the context model state is stored in the buffer, meaning three stored context models states will be available for selection by the static pictures.

In a second embodiment, the first training picture 602 uses the pre-defined context model state for initializing the model. Each subsequent training picture 602 uses the trained context model state from the encoding/decoding of the previous training picture 602. At the end of the training phase, the context model state developed over the course of encoding/decoding the training pictures 602 is saved to the buffer for use by the static pictures 604.

In a third embodiment, the training pictures 602 each use the pre-defined context model state for initializing the model before encoding/decoding of each training picture. At the end of the training phase 602, the encoder/decoder selects one of the trained context model states as the context model state for initialization during encoding/decoding of the static pictures 604. The selection may be based upon QP, hierarchical level, or other factors. In one example, one or more of the trained context model states may be combined to create a merged context model state. Various weighting schemes may be used to merge probabilities of two context model states.

In a fourth embodiment, each training picture 602 uses the pre-defined context model state for encoding/decoding; however, in parallel the training of the context model is carried out starting from the first training picture and carrying through all training pictures. That is, the context model state training is separated from the context model state used for encoding/decoding of training pictures after the first picture. With the second picture, the context model state is re-initialized using the pre-defined context model for the purpose of encoding/decoding, but a separate training context model is maintained that inherits the trained states at the end of the first picture.

By separating the pictures into a training phase and a static phase, error resiliency during the static phase is improved compared to a process in which context model states are saved after each picture and may be used in subsequent pictures.

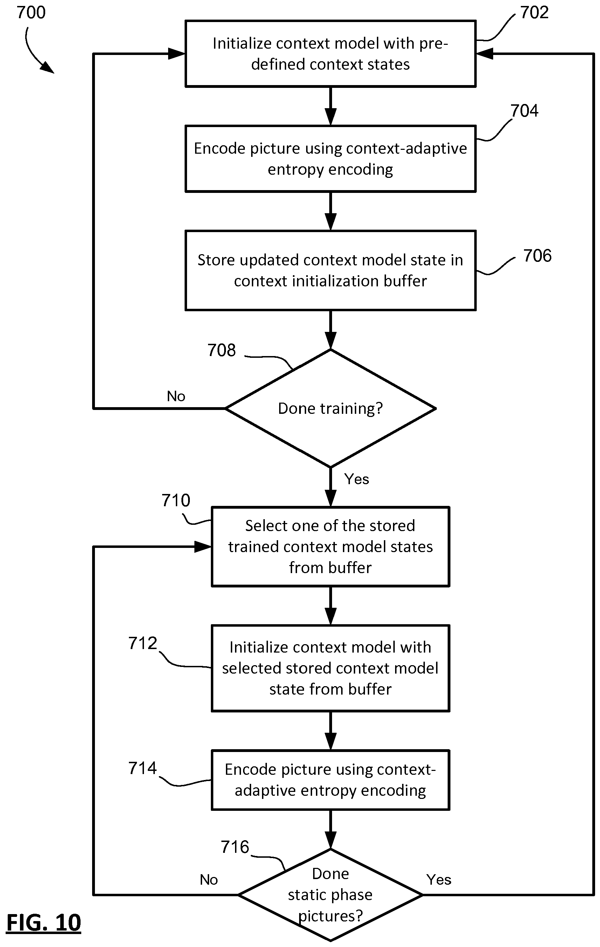

Reference is now made to Figure 10, which shows, in flowchart form, an example method 700 of encoding/decoding that uses a training/static phased context modeling process. The example method 700 illustrated corresponds to the first embodiment mentioned above. The method 700 is used by both the encoder and the decoder in the course of context adaptive encoding and decoding, respectively.

The method 700 is applied to a set of pictures. The set of pictures may be GOP in some examples. The set of pictures may be a subset of the GOP in some examples.

In operation 702, the context model is initialized with probabilities based upon the pre-defined context model states, *i.e.* untrained probabilities pre-established for the encoding/decoding process. The first picture of the set of pictures is then encoded/decoded in operation 704 using context-adaptive entropy coding. In the course of this coding, the context probabilities are updated with each bin (excluding bypass coded bins). After encoding/decoding the picture, the encoder/decoder then saves the updated context model state in the context initialization buffer in operation 706.

In operation 708, the encoder/decoder determines whether it is done the training phase. The training phase may be defined as a number of pictures at the beginning of the set of pictures. For example, three or four pictures may be used for training with the remaining pictures belonging to the static phase. The number of pictures included in the training phase may be configurable number that is set by the encoder and communicated to the decoder in a sequence parameter set or elsewhere in the bitstream. In some embodiments, a syntax element, such as a flag or other element, may signal to the decoder the start/end of training and/or the start/end of the static phase.

If the training phase is not finished, *i.e.* there are additional training pictures to be encoded, then the method 700 returns to operation 702 to reinitialize the context model with the pre-defined context model state and to encode the next picture. If the training phase is finished, then the method 700 proceeds to operation 710 where the encoder selects one of the stored context model states for encoding of a static picture. As described above, the selection may be based upon one or more conditions that tend to result in selecting a context model state from a picture likely to be statistically similar to the current static picture. In operation 712, the selected context model state is used to initialize the context model. The static picture is then encoded in operation 714 using context-adaptive entropy encoding.

In operation 716, the encoder evaluates whether or not there are additional static pictures to be encoded in the set. If so, then it returns to operation 710 to again select a context model state from the stored context model states in the buffer. That selected state is then used to reinitialize the context model for the entropy encoding of the next static picture.

Once all the static pictures are encoded, the method 700 then returns to operation 702 with to repeat the process of training for the next set of pictures.

Those skilled in the art will appreciate that various modifications to the method 700 may be made to implement other embodiments. For example, in the case of the fourth embodiment described above, in which the training context model states are separated from the encoding context model states used during the training phase (after the first training picture), the encoding operation 704 may be modified to reflect the fact that, after the first picture, two context models are being maintained: one for encoding/decoding and one being trained. Other modifications or variations will be appreciated by those ordinarily skilled in the art in light of the description herein.

In one example embodiment, out of caution it may be desirable to reduce or soften the impact of the training operation in case it results in an inaccurate context model state. In such a case, it may be advantageous to ensure that the stored context model states are a blend of the trained context model states developed during the training phase and the pre-defined context model state prescribed by the video coding standard for initializing the model. In other words, the stored context model states may be function of the new trained states and the old pre-defined states.

As an example, if the existing state index is A with MPS = a, and the new state index is B with MPS = b, where MPS means "most probable symbol", the updated state index may be given as:

| | | |
|---|---|---|
| C = | wₐ * A+ w_{b} * B, | if a = b |
| The state corresponding to (1/2,1/2), | | otherwise |

In this example, wₐ and w_{b} are weighting factors. For instance, wₐ = w_{b} =0.5.

In another example, the corresponding probabilities prob A and prob B of the existing state and the new state may be derived first. An estimation for the updated state probability is then:

| | | |
|---|---|---|
| Prob_C = | (wa * prob_A + wb * prob_B)/(wa + wb), | if a = b |
| | wb/(wa+wb) + (wa * prob_A - wb * prob_B)/(wa + wb), | if a!=b and wb + 2*wa*prob_A > wa + 2*wb*prob_B otherwise |
| | wa/(wa+wb) + (wb * prob_B - wa * prob_A)/(wa + wb), | |

In this case,

| | | |
|---|---|---|
| MPS_C = | a, | if wb + 2*wa*prob_A > wa + 2*wb*prob_B |
| | b, | otherwise |

The state may then be updated to the state whose corresponding probability distribution is the closest to prob C. The MPS is updated as MPS C.

### Syntax and Signaling

An initialization indication flag or group of flags may be used to signal from encoder to decoder whether the context initialization buffer is to be used, and how.

In one embodiment, each slice includes a flag indicating whether the slice uses the buffer-stored context model state or the pre-defined context model state. If the buffer is to be used, then it may by default be the context model state stored for the previously-encoded/decoded slice or picture. It may alternatively be a context model state selected from amongst two or more stored context model states based upon one or more conditions/criteria, such as similar QP values, same or similar hierarchical layer, same picture type, or other factors. In some cases, if no buffer-stored context model state meets the criteria then the slice/picture uses the pre-defined context model state.

In another embodiment, if the flag authorizes use of the stored context model states, then the decoder may use the context model state associated with a reference picture to the current picture. If more than one reference picture, then it may select the closest temporally. In one example, it may combine reference picture context model states, perhaps using a weighting mechanism such as that described above in connection with "training" pictures.

In some embodiments, multiple level flags may be defined. For example, an enabling flag may be present in the sequence parameter set to indicate whether there are context initialization flags in the picture parameter set and/or slice header. If yes, then a flag in the picture parameter set may indicate whether or not to use the context initialization buffer for slices in the current picture. A further flag, flags, or code in the slice header may indicate whether that slice uses the pre-defined context model state or a stored context model state and, in some cases, which stored context model state to use.

In another variation, the sequence parameter set flag indicates whether the context initialization is enabled for the sequence. If so, then a flag appears in each slice header to indicate whether that slice uses the pre-defined context model state or a stored context model state. In some cases, the slice header may indicate which stored context model state is selected for that slice; whereas, in other cases the decoder may select which stored context model state to use based on a set of conditions and/or criteria, like those described above.

In another example, a flag in the sequence parameter set may indicate whether or not the context initialization buffer should be flushed to restart the process of building stored context model states. In a further example, such a "flush" flag may be defined for the picture parameter set.

The buffer usage and flag syntax may depend on the type of video sequence being encoded/decoded. For example, in an all-intra-coding case (all I-type pictures), if the picture or slice level flag is not present then the current I picture/slice may be decoded using the updated context model state of the previous I picture/slice, except for the IDR picture which uses the pre-defined context model state.

On the other hand, if there are flags at the picture/slice level in the all-intra case, those flags may signal whether to use the context model state of the previous I picture/slice, or whether to use the pre-defined context model state.

In the case of a random-access sequence, *i.e.* I, P and B pictures in a GOP, there are a number of potential flag uses and meanings. In one embodiment, if there is no flag signaling whether to use the buffer, then the I-pictures use the pre-defined context model state, the P-pictures use the context model state of the previously-decoded P-picture, if any, and the B-pictures use the context model state of the previously-decoded B-picture, if any.

In another embodiment, if there is no flag indicating whether to use the buffer, then the B-picture may use the context model state of the previously-decoded B-picture and the I and P-pictures use the pre-defined context model state.

In the case of a low-delay P setting, then if there is no flag indicating whether to use the stored context model states, then the default setting may be to permit the P-picture to use the stored context model state of the previously-decoded P-picture, whereas the I-picture uses the pre-defined context model state.

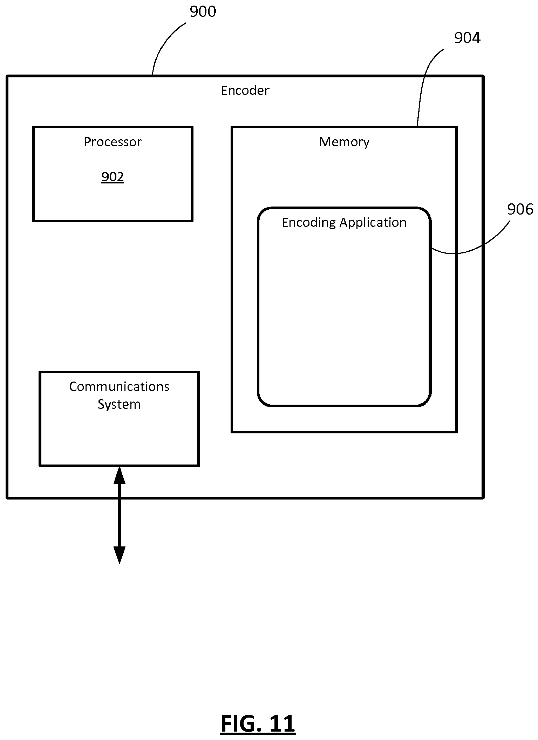

Reference is now made to Figure 11, which shows a simplified block diagram of an example embodiment of an encoder 900. The encoder 900 includes a processor 902, memory 904, and an encoding application 906. The encoding application 906 may include a computer program or application stored in memory 904 and containing instructions for configuring the processor 902 to perform operations such as those described herein. For example, the encoding application 906 may encode and output bitstreams encoded in accordance with the processes described herein. It will be understood that the encoding application 906 may be stored in on a computer-readable medium, such as a compact disc, flash memory device, random access memory, hard drive, etc.

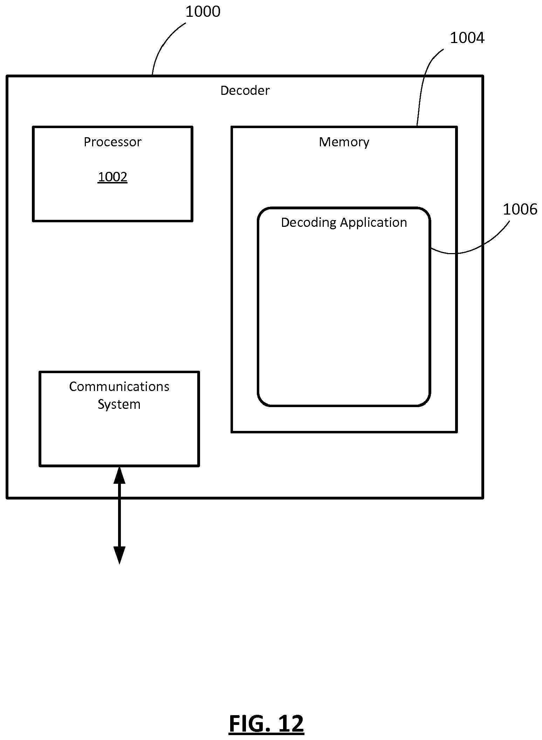

Reference is now also made to Figure 12, which shows a simplified block diagram of an example embodiment of a decoder 1000. The decoder 1000 includes a processor 1002, a memory 1004, and a decoding application 1006. The decoding application 1006 may include a computer program or application stored in memory 1004 and containing instructions for configuring the processor 1002 to perform operations such as those described herein. It will be understood that the decoding application 1006 may be stored in on a computer-readable medium, such as a compact disc, flash memory device, random access memory, hard drive, etc.

It will be appreciated that the decoder and/or encoder according to the present application may be implemented in a number of computing devices, including, without limitation, servers, suitably-programmed general purpose computers, audio/video encoding and playback devices, set-top television boxes, television broadcast equipment, and mobile devices. The decoder or encoder may be implemented by way of software containing instructions for configuring a processor or processors to carry out the functions described herein. The software instructions may be stored on any suitable non-transitory computer-readable memory, including CDs, RAM, ROM, Flash memory, etc.

It will be understood that the encoder described herein and the module, routine, process, thread, or other software component implementing the described method/process for configuring the encoder may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A method of encoding video using a video encoder, wherein the video encoder is configured to employ context-adaptive entropy encoding using a context model, the context model having a context model state defining the probability associated with each context defined in the context model, wherein the video encoder includes a memory, the memory having stored therein a pre-defined context model state for initialization of the context model, and wherein the video encoder includes a buffer (108), the buffer (108) having stored therein a predetermined number of at least two context model states, each of the predetermined number of stored context model states being the context model state after context-adaptive encoding of a respective previously-encoded picture of the video that has been encoded in the video encoder previous to a current picture of the video, the context model states stored in the buffer (108) respectively resulting from context-adaptive encoding of the predetermined number of most recent pictures of the video previous to the current picture,
the method comprising, for encoding the current picture of the video:
selecting one of the predetermined number of stored context model states from the buffer (108) based on one or more criteria relative to the current picture, wherein said selecting is based on the previously-encoded picture being a reference picture for a prediction of the current picture;
initializing the context model for context-adaptively encoding the current picture using the selected one of the predetermined number of stored context model states;
context-adaptively entropy encoding the current picture to produce a bitstream of encoded data, wherein the context-adaptive entropy encoding includes progressively updating the selected one of the predetermined number of stored context model states as bins are encoded, thereby yielding an updated context model state associated with the current picture after the context-adaptively entropy encoding;
storing, in the buffer (108), the updated context model state associated with the current picture after the context-adaptively entropy encoding, in place of the oldest context model state among the predetermined number of context model states stored in the buffer (108); and
prior to selecting, determining that the context model is not to be initialized using the pre-defined context model state for the current picture.

2. A method of decoding video from a bitstream of encoded video using a video decoder, the encoded video having been encoded using context-adaptive entropy encoding using a context model, the context model having a context model state defining the probability associated with each context defined in the context model, wherein the video decoder includes a memory, the memory having stored therein a pre-defined context model state for initialization of the context model, and wherein the video decoder includes a buffer, the buffer having stored therein a predetermined number of at least two context model states, each of the predetermined number of stored context model states being the context model state after context-adaptive decoding of a respective previously-decoded picture of the video that has been decoded in the video decoder previous to a current picture of the video, the context model states stored in the buffer respectively resulting from context-adaptive decoding of the predetermined number of most recent pictures of the video previous to the current picture,
the method comprising, for decoding the current picture of the video:
selecting one of the predetermined number of stored context model states from the buffer based on one or more criteria relative to the current picture, wherein said selecting is based on the previously-decoded picture being a reference picture for a prediction of the current picture;
initializing the context model for context-adaptively decoding the current picture using the selected one of the predetermined number of stored context model states;
context-adaptively entropy decoding the bitstream to reconstruct the current picture, wherein the context-adaptive entropy decoding includes progressively updating the selected one of the predetermined number of stored context model states as bins are decoded, thereby yielding an updated context model state associated with the current picture after the context-adaptively entropy decoding;
storing, in the buffer, the updated context model state associated with the current picture after the context-adaptively entropy decoding, in place of the oldest context model state among the predetermined number of context model states stored in the buffer; and
prior to selecting, determining that the context model is not to be initialized using the pre-defined context model state for the current picture.

3. The method claimed in claim 2, further comprising, for each of the respective previously-decoded pictures,
context-adaptively entropy decoding that picture, wherein the context-adaptive entropy decoding includes progressively updating a context model state as bins are decoded, and
after context-adaptive entropy decoding of that picture, storing the updated context model state in the buffer as one of the predetermined number of context model states.

4. The method claimed in claim 2 or 3, wherein said selecting is further based on similarity in QP values used for the current picture and for the previously-decoded picture.

5. The method claimed in claim 2 or 3, wherein said selecting is further based on the current picture and the previously-decoded picture having the same picture type.

6. The method claimed in claim 2 or 3, wherein said selecting is further based on a relationship between a layer of the previously-decoded picture of a hierarchical layer structure defined for the video and a layer of the current picture of the hierarchical layer structure.

7. The method claimed in claim 6, wherein said selecting is further based on the current picture and the previously-decoded picture being on the same layer of the hierarchical layer structure defined for the video.

8. The method claimed in claim 2 or 3, wherein said selecting is further based on the previously-decoded picture and the current picture being within a threshold temporal distance in the video sequence.

9. The method claimed in claim 2 or 3, wherein said selecting includes:
excluding stored context model states from selection if their respective corresponding previously-decoded pictures are not reference pictures for the current picture;
further excluding stored context model states from selection if their respective corresponding previously-decoded pictures are not of the same picture type as the current picture;
further excluding stored context model states from selection based on a hierarchical layer relationship between their respective corresponding previously-decoded pictures and the current picture in a hierarchical layer structure defined for the video;
further excluding stored context model states from selection if their respective corresponding previously-decoded pictures are more than a threshold of pictures temporally distant from the current picture; and
selecting a stored context model state from the remaining stored context model states on the basis that its respective corresponding previously-decoded picture uses a QP value closest to the CP value used with the current picture.

10. The method claimed in any one of claims 2 to 9, wherein said selecting, initializing and context-adaptively entropy decoding is applied on a slice-by-slice basis within the current picture.

11. A decoder (1000) for decoding a bitstream of encoded video, the encoded video having been encoded using context-adaptive entropy encoding using a context model, the context model having a context model state defining the probability associated with each context defined in the context model, the decoder (1000) comprising:
a processor (1002);
a memory (1004) storing a pre-defined context model state for initialization of the context model;
a buffer storing a predetermined number of at least two context model states, each of the predetermined number of stored context model states being the context model state after context-adaptive decoding of a respective previously-decoded picture of the video that has been decoded in the decoder (1000) previous to a current picture of the video, the context model states stored in the buffer respectively resulting from context-adaptive decoding of the predetermined number of most recent pictures of the video previous to the current picture; and
a decoding application (1006) stored in the memory (1004) and containing instructions executable by the processor (1002) to perform the method claimed in any one of claims 2 to 10.

12. A non-transitory processor-readable medium storing processor-executable instructions which, when executed, cause one or more processors to perform the method claimed in any one of claims 1 to 10.

13. An encoder (900) for encoding video, and employing context-adaptive entropy encoding using a context model, the context model having a context model state defining the probability associated with each context defined in the context model, the decoder (900) comprising:
a processor (902);
a memory (904) storing a pre-defined context model state for initialization of the context model;
a buffer (108) storing a predetermined number of at least two context model states, each of the predetermined number of stored context model states being the context model state after context-adaptive encoding of a respective previously-encoded picture of the video that has been encoded in the encoder (900) previous to a current picture of the video, the context model states stored in the buffer (108) respectively resulting from context-adaptive encoding of the predetermined number of most recent pictures of the video previous to the current picture; and
an encoding application (906) stored in the memory (904) and containing instructions executable by the processor (902) to perform the method claimed in claim 1.

## Patentansprüche

1. Verfahren zum Codieren von Video unter Verwendung eines Videocodierers, wobei der Videocodierer dafür konfiguriert ist, kontextadaptives Entropiecodieren unter Verwendung eines Kontextmodells zu benutzen, wobei das Kontextmodell einen Kontextmodellzustand aufweist, der die Wahrscheinlichkeit definiert, die mit jedem im Kontextmodell definierten Kontext assoziiert ist, wobei der Videocodierer einen Speicher beinhaltet, wobei im Speicher ein vordefinierter Kontextmodellzustand zur Initialisierung des Kontextmodells gespeichert ist, und wobei der Videocodierer einen Zwischenspeicher (108) beinhaltet, wobei im Zwischenspeicher (108) eine festgelegte Anzahl von mindestens zwei Kontextmodellzuständen gespeichert ist, wobei jeder der festgelegten Anzahl gespeicherter Kontextmodellzustände der Kontextmodellzustand nach dem kontextadaptiven Codieren eines entsprechenden zuvor codierten Bildes des Videos ist, das im Videocodierer vor einem aktuellen Bild des Videos codiert wurde, wobei die im Zwischenspeicher (108) gespeicherten Kontextmodellzustände jeweils aus kontextadaptivem Codieren der festgelegten Anzahl jüngster Bilder des Videos vor dem aktuellen Bild resultieren,
wobei das Verfahren zwecks Codierens des aktuellen Bildes des Videos Folgendes umfasst:
Auswählen eines der festgelegten Anzahl gespeicherter Kontextmodellzustände aus dem Zwischenspeicher (108), basierend auf einem oder mehreren Kriterien bezüglich des aktuellen Bildes, wobei das Auswählen auf dem zuvor codierten Bild basiert, das ein Referenzbild für eine Vorhersage des aktuellen Bildes ist,
Initialisieren des Kontextmodells für kontextadaptives Codieren des aktuellen Bildes unter Verwendung des ausgewählten der festgelegten Anzahl gespeicherter Kontextmodellzustände,
kontextadaptives Entropiecodieren des aktuellen Bildes, um einen Bitstrom codierter Daten zu erzeugen, wobei das kontextadaptive Entropiecodieren progressives Aktualisieren des ausgewählten der festgelegten Anzahl gespeicherter Kontextmodellzustände beinhaltet, während Bins codiert werden, wodurch ein aktualisierter Kontextmodellzustand erzielt wird, der nach dem kontextadaptiven Entropiecodieren mit dem aktuellen Bild assoziiert ist,
Speichern des aktualisierten Kontextmodellzustandes, der nach dem kontextadaptiven Entropiecodieren mit dem aktuellen Bild assoziiert ist, in den Zwischenspeicher (108), anstelle des ältesten Kontextmodellzustandes unter der festgelegten Anzahl gespeicherter Kontextmodellzustände im Zwischenspeicher (108) und
vor dem Auswählen Bestimmen, dass das Kontextmodell nicht unter Verwendung des vordefinierten Kontextmodellzustandes für das aktuelle Bild zu initialisieren ist.

2. Verfahren zum Decodieren von Video aus einem Bitstrom codierten Videos unter Verwendung eines Videodecodierers, wobei das codierte Video unter Verwendung kontextadaptiven Entropiecodierens unter Verwendung eines Kontextmodells codiert wurde, wobei das Kontextmodell einen Kontextmodellzustand aufweist, der die Wahrscheinlichkeit definiert, die mit jedem im Kontextmodell definierten Kontext assoziiert ist, wobei der Videodecodierer einen Speicher beinhaltet, wobei im Speicher ein vordefinierter Kontextmodellzustand zur Initialisierung des Kontextmodells gespeichert ist, und wobei der Videodecodierer einen Zwischenspeicher beinhaltet, wobei im Zwischenspeicher eine festgelegte Anzahl von mindestens zwei Kontextmodellzuständen gespeichert ist, wobei jeder der festgelegten Anzahl gespeicherter Kontextmodellzustände der Kontextmodellzustand nach dem kontextadaptiven Decodieren eines entsprechenden zuvor decodierten Bildes des Videos ist, das im Videodecodierer vor einem aktuellen Bild des Videos decodiert wurde, wobei die im Zwischenspeicher gespeicherten Kontextmodellzustände jeweils aus kontextadaptivem Decodieren der festgelegten Anzahl jüngster Bilder des Videos vor dem aktuellen Bild resultieren,
wobei das Verfahren zwecks Decodierens des aktuellen Bildes des Videos Folgendes umfasst:
Auswählen eines der festgelegten Anzahl gespeicherter Kontextmodellzustände aus dem Zwischenspeicher, basierend auf einem oder mehreren Kriterien bezüglich des aktuellen Bildes, wobei das Auswählen auf dem zuvor decodierten Bild basiert, das ein Referenzbild für eine Vorhersage des aktuellen Bildes ist,
Initialisieren des Kontextmodells für kontextadaptives Decodieren des aktuellen Bildes unter Verwendung des ausgewählten der festgelegten Anzahl gespeicherter Kontextmodellzustände,
kontextadaptives Entropiedecodieren des Bitstroms, um das aktuelle Bild zu rekonstruieren, wobei das kontextadaptive Entropiedecodieren progressives Aktualisieren des ausgewählten der festgelegten Anzahl gespeicherter Kontextmodellzustände beinhaltet, während Bins decodiert werden, wodurch ein aktualisierter Kontextmodellzustand erzielt wird, der nach dem kontextadaptiven Entropiedecodieren mit dem aktuellen Bild assoziiert ist,
Speichern des aktualisierten Kontextmodellzustandes, der nach dem kontextadaptiven Entropiedecodieren mit dem aktuellen Bild assoziiert ist, in den Zwischenspeicher, anstelle des ältesten Kontextmodellzustandes unter der festgelegten Anzahl gespeicherter Kontextmodellzustände im Zwischenspeicher und
vor dem Auswählen Bestimmen, dass das Kontextmodell nicht unter Verwendung des vordefinierten Kontextmodellzustandes für das aktuelle Bild zu initialisieren ist.

3. Verfahren nach Anspruch 2, ferner für jedes der entsprechenden zuvor decodierten Bilder Folgendes umfassend:
kontextadaptives Entropiedecodieren des Bildes, wobei das kontextadaptive Entropiedecodieren progressives Aktualisieren eines Kontextmodellzustandes beinhaltet, während Bins decodiert werden, und
nach dem kontextadaptiven Entropiedecodieren des Bildes Speichern des aktualisierten Kontextmodellzustandes im Zwischenspeicher als einen der festgelegten Anzahl an Kontextmodellzuständen.

4. Verfahren nach Anspruch 2 oder 3, wobei das Auswählen ferner auf Ähnlichkeit in QP-Werten für das aktuelle Bild und für das zuvor decodierte Bild basiert.

5. Verfahren nach Anspruch 2 oder 3, wobei das Auswählen ferner darauf basiert, dass das aktuelle Bild und das zuvor decodierte Bild die gleiche Bildart aufweisen.

6. Verfahren nach Anspruch 2 oder 3, wobei das Auswählen ferner auf einem Verhältnis zwischen einer Schicht des zuvor decodierten Bildes einer hierarchischen Schichtstruktur, die für das Video definiert ist, und einer Schicht des aktuellen Bildes der hierarchischen Schichtstruktur basiert.

7. Verfahren nach Anspruch 6, wobei das Auswählen ferner darauf basiert, dass das aktuelle Bild und das zuvor decodierte Bild in der gleichen Schicht der für das Video definierten hierarchischen Schichtstruktur liegen.

8. Verfahren nach Anspruch 2 oder 3, wobei das Auswählen ferner darauf basiert, dass das zuvor decodierte Bild und das aktuelle Bild innerhalb einer Grenze zeitlichen Abstandes in der Videosequenz liegen.

9. Verfahren nach Anspruch 2 oder 3, wobei das Auswählen Folgendes beinhaltet:
Ausschließen gespeicherter Kontextmodellzustände aus der Auswahl, wenn ihre jeweiligen entsprechenden zuvor decodierten Bilder keine Referenzbilder für das aktuelle Bild sind,
weiteres Ausschließen gespeicherter Kontextmodellzustände aus der Auswahl, wenn ihre jeweiligen entsprechenden zuvor decodierten Bilder nicht von der gleichen Bildart sind wie das aktuelle Bild,
weiteres Ausschließen gespeicherter Kontextmodellzustände aus der Auswahl basierend auf einem hierarchischen Schichtverhältnis zwischen ihren jeweiligen entsprechenden zuvor decodierten Bildern und dem aktuellen Bild in einer für das Video definierten hierarchischen Schichtstruktur,
weiteres Ausschließen gespeicherter Kontextmodellzustände aus der Auswahl, wenn ihre jeweiligen entsprechenden zuvor decodierten Bilder um mehr als einen Grenzwert von Bildern zeitlich vom aktuellen Bild beabstandet sind, und
Auswählen eines gespeicherten Kontextmodellzustandes aus den verbleibenden gespeicherten Kontextmodellzuständen auf der Basis, dass sein jeweiliges entsprechendes zuvor decodiertes Bild einen QP-Wert verwendet, der dem mit dem aktuellen Bild verwendeten CP-Wert am nächsten liegt.

10. Verfahren nach einem der Ansprüche 2 bis 9, wobei das Auswählen, Initialisieren und kontextadaptive Entropiedecodieren im aktuellen Bild auf einer Slicefür-Slice-Basis angewandt wird.

11. Decodierer (1000) zum Decodieren eines Bitstroms codierten Videos, wobei das codierte Video unter Verwendung kontextadaptiven Entropiecodierens unter Verwendung eines Kontextmodells codiert wurde, wobei das Kontextmodell einen Kontextmodellzustand aufweist, der die Wahrscheinlichkeit definiert, die mit jedem im Kontextmodell definierten Kontext assoziiert ist, wobei der Decodierer (1000) Folgendes umfasst:
einen Prozessor (1002),
einen Speicher (1004), der einen vordefinierten Kontextmodellzustand für die Initialisierung des Kontextmodells speichert,
einen Zwischenspeicher, der eine festgelegte Anzahl von mindestens zwei Kontextmodellzuständen speichert, wobei jeder der festgelegten Anzahl gespeicherter Kontextmodellzustände der Kontextmodellzustand nach dem kontextadaptivem Decodieren eines entsprechenden zuvor decodierten Bildes des Videos ist, das im Decodierer (1000) vor einem aktuellen Bild des Videos decodiert wurde, wobei die im Zwischenspeicher gespeicherten Kontextmodellzustände jeweils aus kontextadaptiven Decodieren der festgelegten Anzahl jüngster Bilder des Videos vor dem aktuellen Bild resultieren, und
eine Decodieranwendung (1006), die im Speicher (1004) gespeichert ist und Anweisungen enthält, die vom Prozessor (1002) ausführbar sind, um das Verfahren nach einem der Ansprüche 2 bis 10 durchzuführen.

12. Nichtflüchtiges, prozessorlesbares Medium, das prozessoranwendbare Anweisungen speichert, die bei Ausführung einen oder mehrere Prozessoren veranlassen, das Verfahren- nach einem der Ansprüche 1 bis 10 durchzuführen.

13. Codierer (900) zum Codieren von Video und unter Benutzung kontextadaptiven Entropiecodierens unter Verwendung eines Kontextmodells, wobei das Kontextmodell einen Kontextmodellzustand aufweist, der die Wahrscheinlichkeit definiert, die mit jedem im Kontextmodell definierten Kontext assoziiert ist, wobei der Decodierer (900) Folgendes umfasst:
einen Prozessor (902),
einen Speicher (904), der einen festgelegten Kontextmodellzustand zur Initialisierung des Kontextmodells speichert,
einen Zwischenspeicher (108), der eine festgelegte Anzahl von mindestens zwei Kontextmodellzuständen speichert, wobei jeder der festgelegten Anzahl gespeicherter Kontextmodellzustände der Kontextmodellzustand nach dem kontextadaptivem Codieren eines entsprechenden zuvor codierten Bildes des Videos ist, das im Codierer (900) vor einem aktuellen Bild des Videos codiert wurde, wobei die im Zwischenspeicher (108) gespeicherten Kontextmodellzustände jeweils aus kontextadaptivem Codieren der festgelegten Anzahl jüngster Bilder des Videos vor dem aktuellen Bild resultieren, und
eine Codieranwendung (906), die im Speicher (904) gespeichert ist und Anweisungen enthält, die vom Prozessor (902) ausführbar sind, um das Verfahren nach Anspruch 1 durchzuführen.

## Revendications

1. Procédé de codage vidéo utilisant un codeur vidéo, où le codeur vidéo est configuré pour employer un codage entropique adaptatif au contexte utilisant un modèle de contexte, le modèle de contexte ayant un état de modèle de contexte définissant la probabilité associée à chaque contexte défini dans le modèle de contexte, où le codeur vidéo comporte une mémoire, la mémoire ayant un état de modèle de contexte prédéfini pour l'initialisation du modèle de contexte stocké dans celle-ci, et où le codeur vidéo comporte une mémoire tampon (108), la mémoire tampon (108) ayant un nombre prédéterminé d'au moins deux états de modèle de contexte stocké dans celle-ci, chacun du nombre prédéterminé d'états de modèle de contexte stockés étant l'état de modèle de contexte après le codage adaptatif au contexte d'une image respective précédemment codée de la vidéo qui a été codée dans le codeur vidéo avant une image actuelle de la vidéo, les états de modèle de contexte stockés dans la mémoire tampon (108) résultant respectivement du codage adaptatif au contexte du nombre prédéterminé des images les plus récentes de la vidéo avant l'image actuelle,
le procédé comprenant, pour coder l'image actuelle de la vidéo :
la sélection de l'un du nombre prédéterminé d'états de modèle de contexte stockés à partir de la mémoire tampon (108) sur la base d'un ou plusieurs critères relatifs à l'image actuelle, où ladite sélection est basée sur l'image précédemment codée qui est une image de référence pour une prédiction de l'image actuelle ;
l'initialisation du modèle de contexte pour le codage adaptatif au contexte de l'image actuelle en utilisant l'état sélectionné du nombre prédéterminé d'états de modèle de contexte stockés ;
le codage entropique adaptatif au contexte de l'image actuelle pour produire un train de bits de données codées, où le codage entropique adaptatif au contexte comporte la mise à jour progressive de l'état sélectionné du nombre prédéterminé d'états de modèle de contexte stockés à mesure que des segments sont codés, générant ainsi un état de modèle de contexte mis à jour associé à l'image actuelle après le codage entropique adaptatif au contexte ;
le stockage, dans la mémoire tampon (108), de l'état de modèle de contexte mis à jour associé à l'image actuelle après le codage entropique adaptatif au contexte, à la place de l'état de modèle de contexte le plus ancien parmi le nombre prédéterminé d'états de modèle de contexte stockés dans la mémoire tampon (108) ; et
la détermination, avant la sélection, du fait que le modèle de contexte ne doit pas être initialisé en utilisant l'état de modèle de contexte prédéfini pour l'image actuelle.

2. Procédé de décodage vidéo à partir d'un train de bits de vidéo codée utilisant un décodeur vidéo, la vidéo codée ayant été codée en utilisant un codage entropique adaptatif au contexte utilisant un modèle de contexte, le modèle de contexte ayant un état de modèle de contexte définissant la probabilité associée à chaque contexte défini dans le modèle de contexte, où le décodeur vidéo comporte une mémoire, la mémoire ayant un état de modèle de contexte prédéfini pour l'initialisation du modèle de contexte stocké dans celle-ci, et où le décodeur vidéo comporte une mémoire tampon, la mémoire tampon ayant un nombre prédéterminé d'au moins deux états de modèle de contexte stocké dans celle-ci, chacun du nombre prédéterminé d'états de modèle de contexte stockés étant l'état de modèle de contexte après un décodage adaptatif au contexte d'une image respective précédemment décodée de la vidéo qui a été décodée dans le décodeur vidéo avant une image actuelle de la vidéo, les états de modèle de contexte stockés dans la mémoire tampon résultant respectivement d'un décodage adaptif au contexte du nombre prédéterminé des images les plus récentes de la vidéo avant l'image actuelle,
le procédé comprenant, pour décoder l'image actuelle de la vidéo :
la sélection de l'un du nombre prédéterminé d'états de modèle de contexte stockés à partir de la mémoire tampon sur la base d'un ou plusieurs critères relatifs à l'image actuelle, où ladite sélection est basée sur l'image précédemment décodée qui est une image de référence pour une prédiction de l'image actuelle ;
l'initialisation du modèle de contexte pour le décodage adaptatif au contexte de l'image actuelle en utilisant l'état sélectionné du nombre prédéterminé d'états de modèle de contexte stockés ;
le décodage entropique adaptatif au contexte du train de bits pour reconstruire l'image actuelle, où le décodage entropique adaptatif au contexte comporte la mise à jour progressive de l'état sélectionné du nombre prédéterminé d'états de modèle de contexte stockés à mesure que des segments sont décodés, générant ainsi un état de modèle de contexte mis à jour associé l'image actuelle après le décodage entropique adaptatif au contexte ;
le stockage, dans la mémoire tampon, de l'état de modèle de contexte mis à jour associé à l'image actuelle après le décodage entropique adaptatif au contexte, à la place de l'état de modèle de contexte le plus ancien parmi le nombre prédéterminé d'états de modèle de contexte stockés dans la mémoire tampon ; et
la détermination, avant la sélection, du fait que le modèle de contexte ne doit pas être initialisé en utilisant l'état de modèle de contexte prédéfini pour l'image actuelle.

3. Procédé tel que revendiqué dans la revendication 2, comprenant en outre, pour chacune des images respectives précédemment décodées,
le décodage entropique adaptatif au contexte de cette image, où le décodage entropique adaptatif au contexte comporte la mise à jour progressive d'un état de modèle de contexte à mesure que des segments sont décodés, et
le stockage, après le décodage entropique adaptatif au contexte de cette image, de l'état de modèle de contexte mis à jour dans la mémoire tampon comme étant l'un du nombre prédéterminé d'états de modèle de contexte.

4. Procédé tel que revendiqué dans la revendication 2 ou 3, dans lequel ladite sélection est en outre basée sur la similarité des valeurs QP utilisées pour l'image actuelle et pour l'image précédemment décodée.

5. Procédé tel que revendiqué dans la revendication 2 ou 3, dans lequel ladite sélection est en outre basée sur l'image actuelle et l'image précédemment décodée ayant le même type d'image.

6. Procédé tel que revendiqué dans la revendication 2 ou 3, dans lequel ladite sélection est en outre basée sur une relation entre une couche de l'image précédemment décodée d'une structure de couche hiérarchique définie pour la vidéo et une couche de l'image actuelle de la structure de couche hiérarchique.

7. Procédé tel que revendiqué dans la revendication 6, dans lequel ladite sélection est en outre basée sur l'image actuelle et l'image précédemment décodée qui sont sur la même couche de la structure de couche hiérarchique définie pour la vidéo.

8. Procédé tel que revendiqué dans la revendication 2 ou 3, dans lequel ladite sélection est en outre basée sur l'image précédemment décodée et l'image actuelle qui sont dans une distance temporelle seuil dans la séquence vidéo.

9. Procédé tel que revendiqué dans la revendication 2 ou 3, dans lequel ladite sélection comporte :
l'exclusion des états de modèle de contexte stockés de la sélection si leurs images correspondantes respectives précédemment décodées ne sont pas des images de référence pour l'image actuelle ;
l'exclusion supplémentaire des états de modèle de contexte stockés de la sélection si leurs images correspondantes respectives précédemment décodées ne sont pas du même type d'image que l'image actuelle ;
l'exclusion supplémentaire des états de modèle de contexte stockés de la sélection sur la base d'une relation de couche hiérarchique entre leurs images correspondantes respectives précédemment décodées et l'image actuelle dans une structure de couche hiérarchique définie pour la vidéo ;
l'exclusion supplémentaire des états de modèle de contexte stockés de la sélection si leurs images correspondantes respectives précédemment décodées dépassent un seuil d'images temporellement éloignées de l'image actuelle ; et
la sélection d'un état de modèle de contexte stocké à partir des états de modèle de contexte stockés-restants sur la base du fait que son image correspondante respective précédemment décodée utilise une valeur QP la plus proche de la valeur CP utilisée avec l'image actuelle.

10. Procédé tel que revendiqué dans l'une quelconque des revendications 2 à 9, dans lequel ladite sélection, ladite initialisation, ledit décodage entropique adaptatif au contexte sont appliqués tranche par tranche dans l'image actuelle.

11. Décodeur (1000) pour décoder un train de bits de vidéo codée, la vidéo codée ayant été codée en utilisant un codage entropique adaptatif au contexte utilisant un modèle de contexte, le modèle de contexte ayant un état de modèle de contexte définissant la probabilité associée à chaque contexte défini dans le modèle de contexte, le décodeur (1000) comprenant :
un processeur (1002) ;
une mémoire (1004) stockant un état de modèle de contexte prédéfini pour l'initialisation du modèle de contexte ;
une mémoire tampon stockant un nombre prédéterminé d'au moins deux états de modèle de contexte, chacun du nombre prédéterminé d'états de modèle de contexte stockés étant l'état de modèle de contexte après le décodage adaptatif au contexte d'une image respective précédemment décodée de la vidéo qui a été décodée dans le décodeur (1000) avant une image actuelle de la vidéo, les états de modèle de contexte stockés dans la mémoire tampon résultant respectivement du décodage adaptatif au contexte du nombre prédéterminé des images les plus récentes de la vidéo avant l'image actuelle ;.et
une application de décodage (1006) stockée dans la mémoire (1004) et contenant des instructions exécutables par le processeur (1002) pour mettre en oeuvre le procédé tel que revendiqué dans l'une quelconque des revendications 2 à 10.

12. Support lisible par processeur non transitoire stockant des instructions exécutables par un processeur qui, lorsqu'elles sont exécutées, amènent un ou plusieurs processeurs à mettre en oeuvre le procédé tel que revendiqué dans l'une quelconque des revendications 1 à 10.

13. Codeur (900) de codage vidéo, et d'emploi d'un codage entropique adaptatif au contexte utilisant un modèle de contexte, le modèle de contexte ayant un état de modèle de contexte définissant la probabilité associée à chaque contexte défini dans le modèle de contexte, le décodeur (900) comprenant :
un processeur (902) ;
une mémoire (904) stockant un état de modèle de contexte prédéfini pour l'initialisation du modèle de contexte ;
une mémoire tampon (108) stockant un nombre prédéterminé d'au moins deux états de modèle de contexte, chacun du nombre prédéterminé d'états de modèle de contexte stockés étant l'état de modèle de contexte après un codage adaptatif au contexte d'une image respective précédemment codée de la vidéo qui a été codée dans le codeur (900) avant une image actuelle de la vidéo, les états de modèle de contexte stockés dans la mémoire tampon (108) résultant respectivement du codage adaptif au contexte du nombre prédéterminé des images les plus récentes de la vidéo avant l'image actuelle ; et
une application de codage (906) stockée dans la mémoire (904) et contenant des instructions exécutables par le processeur (902) pour mettre en oeuvre le procédé tel que revendiqué dans la revendication 1.
